# FASCICULE DE BREVET EUROPEEN

(11) **EP 0 803 671 B1**
(45) Date de publication et mention de la délivrance du brevet: **20.03.2002**
(21) Numéro de dépôt: 97201087.0
(22) Date de dépôt: 11.04.1997
(51) Int. Cl.: F16K 24/04, F16K 17/36, B60K 15/035

(54) **Clapet de sécurité pour circuit de mise à l'air d'un réservoir à liquide**
Sicherheitsventil für eine Entlüftungsleitung eines Flüssigkeitsbehälters
Safety valve for a venting line in a liquid container

(30) Priorité: 22.04.1996 BE 9600350
(43) Date de publication de la demande: 29.10.1997
(73) Titulaire: SOLVAY (Société Anonyme), 1050 Bruxelles (BE)
(72) Inventeur: Turpin, Jacques, 44470 Carquefou (FR); Percebois, Serge, 53230 Courbeveille (FR)
(74) Mandataire: Decamps, Alain René François

(56) Documents cités:
- EP-A- 0 336 788
- DE-A- 4 121 324
- FR-A- 2 606 856
- US-A- 3 765 435
- US-A- 4 886 089

## Description

La présente invention concerne un clapet de sécurité pour circuit de mise à l'air d'un réservoir à liquide, en particulier d'un réservoir à carburant pouvant équiper un véhicule automobile.

Les réservoirs à liquide, en particulier les réservoirs à carburant pour véhicules automobiles, sont aujourd'hui généralement dotés, entre autres, d'un circuit de mise à l'air. Ce circuit permet l'introduction d'air dans le réservoir en cas de dépression (notamment pour compenser le volume de liquide consommé) ou l'évacuation des gaz contenus dans le réservoir en cas de surpression (notamment en cas d'échauffement). Ce circuit permet également la canalisation et le filtrage éventuel des gaz devant être rejetés à l'atmosphère, en vue de satisfaire aux exigences environnementales de plus en plus strictes en la matière.

Le circuit de mise à l'air comprend de manière connue un clapet de sécurité empêchant autant que possible la sortie de liquide provenant du réservoir en cas de retournement ou d'inclinaison excessive du réservoir. Ce clapet de sécurité doit offrir une réponse rapide et sûre lorsque ses conditions d'intervention surviennent, mais avec une sensibilité minimale aux phénomènes anormaux tels que notamment les débits très élevés, les surpressions dans le réservoir ou les vagues de faible amplitude.

De nombreux clapets de sécurité mettent en oeuvre un flotteur comportant un pointeau supérieur venant obturer un orifice de connexion entre le réservoir et le circuit de mise à l'air. Ces éléments ne permettent pas seuls de répondre à l'ensemble des exigences susmentionnées.

Il est connu de leur adjoindre un ou plusieurs moyens élastiques de tarage, en particulier des ressorts, mais de tels ensembles ne répondent pas de manière satisfaisante aux exigences requises, notamment en ce qu'ils laissent subsister un risque d'obturation indésirable dans des conditions sévères pouvant engendrer la rupture de l'équilibre des forces mises en oeuvre, par exemple en cas de surpression importante dans le réservoir.

Il est également connu, notamment selon US-A-3 765 435 d'associer au flotteur une bille pouvant se déplacer sur un plan incliné percé de plusieurs orifices et permettant en principe d'entraîner le flotteur vers le haut et d'obturer au moyen d'un pointeau un orifice supérieur de connexion entre le réservoir et le circuit de mise à l'air en cas d'inclinaison du réservoir. Un tel système reste néanmoins très sensible aux phénomènes anormaux tels que susmentionnés.

L'invention a dès lors pour objet de fournir un clapet de sécurité pour circuit de mise à l'air d'un réservoir à liquide empêchant l'entraînement de liquide et présentant une sensibilité minimale aux phénomènes anormaux tels que susmentionnés.

L'invention concerne à cet effet un clapet de sécurité pour circuit de mise à l'air d'un réservoir à liquide empêchant l'entraînement de liquide, comprenant une enceinte qui débouche à l'intérieur du réservoir, sous la paroi supérieure de celui-ci, et dont la partie supérieure est reliée par un orifice au circuit de mise à l'air, comportant:
a) un pointeau pouvant obturer, en position haute, l'orifice situé dans la tête du clapet;
b) un flotteur associé au pointeau et pouvant coulisser verticalement à l'intérieur de l'enceinte;
c) des moyens de support du flotteur et de déplacement dudit flotteur vers le haut en cas d'inclinaison de l'enceinte,
selon lequel un fût prolonge la partie inférieure de l'enceinte à l'intérieur du réservoir sous les moyens de support et de déplacement du flotteur.

Le clapet de sécurité est destiné au circuit de mise à l'air d'un réservoir pouvant contenir un liquide quelconque. En particulier, le liquide peut être un carburant, un liquide de frein ou un lubrifiant. Plus particulièrement, le liquide est un carburant. Le réservoir peut être destiné à tout usage, spécialement à équiper un véhicule et plus spécialement encore à équiper un véhicule automobile.

L'enceinte peut avoir une forme quelconque, souvent intérieurement adaptée au coulissement du flotteur. Le plus souvent, elle est à cet effet de section intérieure constante, au moins dans la partie où le flotteur doit pouvoir coulisser. Elle est en particulier, au moins dans cette partie, intérieurement cylindrique.

La forme extérieure du flotteur est évidemment adaptée à celle de l'intérieur de l'enceinte où il doit pouvoir coulisser. En particulier, il est donc extérieurement cylindrique.

Le flotteur est associé au pointeau de manière usuelle quelconque. De préférence, il est solidaire du pointeau. Le flotteur et le pointeau peuvent être produits en une seule pièce ou être produits séparément et assemblés. Le pointeau peut avantageusement être équipé d'un joint d'étanchéité, par exemple d'un joint membrame en élastomère, favorisant l'étanchéité du clapet en position fermée.

L'orifice situé dans la tête du clapet permet, lorsqu'il est obturé, la fermeture du clapet. Cet orifice peut également ou alternativement être équipé d'un joint d'étanchéité, par exemple d'un joint plat de type membrane en élastomère.

Le fût prolonge la partie inférieure de l'enceinte à l'intérieur du réservoir sous les moyens de support et de déplacement du flotteur. Il permet de canaliser le flux de carburant et d'obtenir la sensibilité nécessaire au bon fonctionnement du clapet. Il protège les éléments mobiles du clapet, en particulier le flotteur, des vagues essentiellement latérales de grande amplitude qui pourraient les déstabiliser, retarder la fermeture du clapet et provoquer ainsi l'entraînement de liquide dans le circuit de mise à l'air. Le clapet est ainsi rendu insensible à ce problème et son fonctionnement en est sensiblement amélioré.

La hauteur du fût peut être adaptée au cas par cas selon l'amplitude des phénomènes anormaux auxquels on veut rendre insensible le clapet. On tiendra évidemment aussi compte en vue de ce dimensionnement de la position précise du clapet dans le réservoir et des effets que peut induire la proximité éventuelle d'autres éléments tel que par exemple une paroi du réservoir.

Le clapet de sécurité permet la mise à l'air d'un réservoir à liquide de la manière décrite ci-avant. Il n'a pas, en tant que tel, pour fonction d'éviter le suremplissage du réservoir. Cette fonction doit donc, le cas échéant, être remplie par un dispositif indépendant ou par des moyens supplémentaires qui seraient associés au clapet. Les caractéristiques du clapet, en particulier la hauteur du fût, ne sont donc pas dictées par la fonction d'interdiction de suremplissage.

Les moyens de support du flotteur et de déplacement dudit flotteur en cas d'inclinaison de l'enceinte peuvent être de tout type connu. Avantageusement, ils comprennent une bille de matière dense pouvant se déplacer par gravité dans une coupelle tronconique ajourée. Par ajourée, on entend que plusieurs ouvertures sont pratiquées dans la coupelle qui permettent le passage de liquide au travers de la coupelle. En particulier, la coupelle tronconique comprend un orifice central.

En cas d'inclinaison du réservoir, la bille se déplace dans la coupelle tronconique, entraîne le flotteur vers le haut et provoque l'obturation par le pointeau de l'orifice de la tête du clapet avant même la montée du niveau de liquide dans le clapet, évitant ainsi complètement le passage de liquide dans le circuit de mise à l'air.

En cas de retournement du réservoir, la bille de matière dense pousse également le flotteur vers la position de fermeture du clapet et le maintient par gravité dans cette position.

En cas de montée du niveau de liquide dans le réservoir, ce liquide pénètre dans le clapet par la partie inférieure, au travers des ouvertures de la coupelle tronconique, entraîne le flotteur vers le haut et provoque également l'obturation par le pointeau de l'orifice situé dans la tête du clapet.

Dans un mode de réalisation préféré, l'enceinte comporte dans sa partie supérieure une ou plusieurs ouvertures latérales permettant le passage des gaz. Plus préférentiellement, l'enceinte comporte dans sa partie supérieure plusieurs ouvertures latérales permettant le passage des gaz. Avantageusement, les ouvertures latérales sont calibrées de faibles dimensions, afin d'empêcher le passage de débits de liquide significatifs, en particulier par laminage. Ces ouvertures peuvent par exemple être réalisées sur un circuit muni d'une ou plusieurs chicanes ou en labyrinthe. En particulier, ces ouvertures sont de section rectangulaire allongée. De manière avantageuse, ces ouvertures sont au moins au nombre de 2, plus avantageusement encore au moins 4. De préférence, leur nombre ne dépasse pas 8. L'ensemble de ces ouvertures représente de préférence une section totale de passage d'au moins 35 mm², plus préférentiellement encore d'au moins 45 mm². De bons résultats ont été obtenus lorsque l'ensemble de ces ouvertures représente une section totale de passage n'excédant pas 100 mm².

Par gaz, on entend particulièrement désigner l'air extérieur devant être introduit dans le réservoir ou les mélanges gazeux compris dans le réservoir et dont l'évacuation doit être rendue possible. Dans le cas d'un réservoir à carburant, ces mélanges gazeux comprennent essentiellement de l'air et de la vapeur de carburant.

Par le positionnement dans la partie supérieure de l'enceinte des ouvertures permettant le passage des gaz, on réduit très sensiblement les incidences éventuelles sur ces ouvertures du niveau de liquide et de ses mouvements, permettant ainsi la mise à l'air même dans certaines situations critiques.

De manière avantageuse, le coulissement du flotteur à l'intérieur de l'enceinte est réalisé par un guidage ajusté. Ainsi, le flotteur ne peut quasiment pas se déplacer dans une autre direction que la direction verticale. Ce guidage ajusté peut notamment être réalisé par le dimensionnement radial adéquat des deux pièces en contact et/ou par un ensemble de nervures longitudinales sur le flotteur et/ou sur l'enceinte.

Ce mode de réalisation améliore le fonctionnement du clapet en ce que, par ce guidage ajusté, il apparaît lorsque le niveau de liquide monte dans l'enceinte, un effet de piston engendré par la pression dynamique du fluide et qui favorise le mouvement du flotteur vers le haut. Au contraire, lorsque le liquide redescend, un effet d'aspiration favorise également l'entraînement du flotteur vers sa position basse.

De manière préférée, lorsque le pointeau est en position haute et obture l'orifice, il définit dans la partie supérieure de l'enceinte un volume fermé. En position de fermeture du clapet, ce volume fermé rempli de gaz offre l'avantage d'un effet tampon évitant au liquide de parvenir près de l'orifice de mise à l'air et a fortiori de sortir du réservoir.

Dans un mode de réalisation particulier, le fût peut être biseauté. De cette manière, on peut éventuellement protéger sélectivement le clapet contre les mouvements de fluide provenant d'une direction particulière.

Les éléments constitutifs du clapet peuvent être réalisés en tout matériau. De préférence, ils sont réalisés à base de matière thermoplastique. Dans ce cas, il convient évidemment de choisir la ou les matières de façon telle qu'elles résistent aux contraintes d'utilisation. Les matériaux choisis doivent en particulier être évidemment inertes vis-à-vis des liquides avec lesquels ils sont amenés à être en contact, en particulier vis-à-vis des carburants.

Le mode et l'emplacement de fixation du clapet sur le réservoir peuvent être choisis de toute manière usuelle adaptée aux conditions spécifiques. De préférence, le clapet est directement assemblé sur la paroi supérieure du réservoir.

L'invention concerne également un réservoir comprenant un clapet tel que défini ci-dessus.

L'invention est illustrée de manière non limitative par les figures suivantes:
- la figure 1 représente un clapet de sécurité selon l'invention, en position ouverte;
- la figure 2 représente le même clapet, en position fermée.

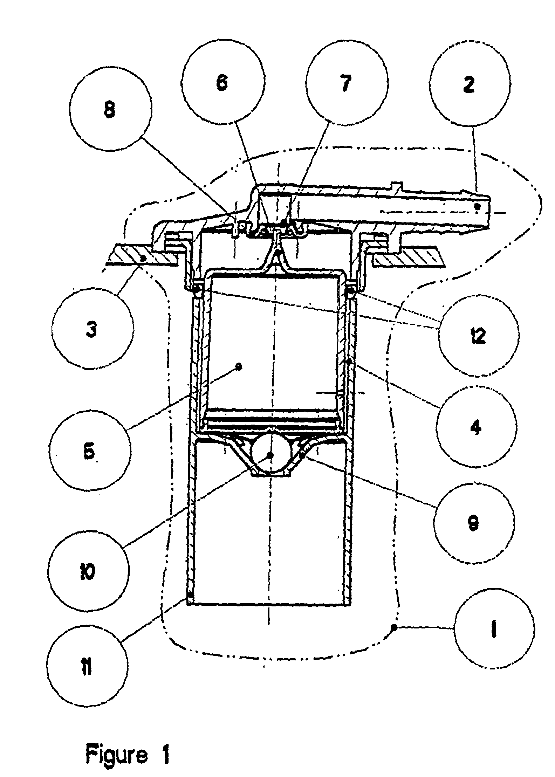

Selon la figure 1, le clapet de sécurité (1) pour circuit de mise à l'air (2) est fixé sur la paroi supérieure du réservoir (3). Le clapet de sécurité (1) comprend une enceinte (4) qui débouche à l'intérieur du réservoir. Dans l'enceinte (4), un flotteur (5), représenté en position basse, peut coulisser verticalement pour obturer par l'intermédiaire d'un pointeau (6) (produit en une seule pièce avec le flotteur), en position haute, un orifice (7) situé dans la tête du clapet. Afin d'améliorer l'étanchéité de la fermeture, l'orifice (7) est pourvu d'un joint élastomère (8). Le flotteur (5) peut être mis en mouvement par la montée du liquide dans le clapet au travers de la coupelle tronconique ajourée (9) ou, en cas d'inclinaison du réservoir, par déplacement d'une bille (10) de matière dense dans la coupelle tronconique (9). L'enceinte (4) est prolongée dans sa partie inférieure par un fût (11). Elle comporte dans sa partie supérieure 4 ouvertures latérales (12) de faibles dimensions, permettant le passage des gaz mais empêchant le passage de débits de liquide significatifs.

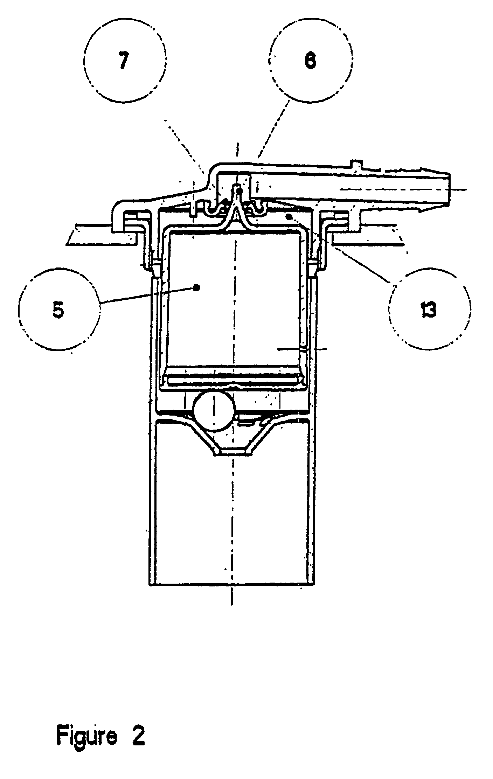

La figure 2 illustre le flotteur (5) en position haute, lorsque le pointeau (6) obture l'orifice (7). Un volume fermé (13) rempli de gaz est alors défini dans la partie supérieure de l'enceinte.

## Revendications

1. Clapet de sécurité (1) pour circuit de mise à l'air (2) d'un réservoir à liquide empêchant l'entraînement de liquide, comprenant une enceinte (4) qui débouche à l'intérieur du réservoir, sous la paroi supérieure (3) de celui-ci, et dont la partie supérieure est reliée par un orifice (7) au circuit de mise à l'air (2), comportant:
a) un pointeau (6) pouvant obturer, en position haute, l'orifice (7) situé dans la tête du clapet;
b) un flotteur (5) associé au pointeau (6) et pouvant coulisser verticalement à l'intérieur de l'enceinte (4);
c) des moyens de support (9) du flotteur (5) et de déplacement dudit flotteur vers le haut en cas d'inclinaison de l'enceinte,
**caractérisé en ce qu'**un fût (11) prolonge la partie inférieure de l'enceinte à l'intérieur du réservoir sous les moyens de support (9) et de déplacement du flotteur (5).

2. Clapet (1) selon la revendication 1, dans lequel les moyens de support (9) du flotteur (5) et de déplacement dudit flotteur (5) vers le haut en cas d'inclinaison de l'enceinte (4) comprennent une bille (10) de matière dense pouvant se déplacer par gravité dans une coupelle tronconique ajourée (9).

3. Clapet (1) selon l'une quelconque des revendications précédentes, dans lequel l'enceinte (4) comporte dans sa partie supérieure une ou plusieurs ouvertures latérales (12) permettant le passage des gaz.

4. Clapet (1) selon la revendication précédente, dans lequel l'enceinte (4) comporte dans sa partie supérieure plusieurs ouvertures latérales calibrées (12) de faibles dimensions, afin d'empêcher le passage de débits de liquide significatifs.

5. Clapet (1) selon l'une quelconque des revendications précédentes, dans lequel le coulissement du flotteur (5) à l'intérieur de l'enceinte (4) est réalisé par un guidage ajusté.

6. Clapet (1) selon l'une quelconque des revendications précédentes, dans lequel lorsque le pointeau (6) est en position haute et obture l'orifice, il définit dans la partie supérieure de l'enceinte (4) un volume fermé (13).

7. Clapet (1) selon l'une quelconque des revendications précédentes, dans lequel le fût (11) est biseauté.

8. Clapet (1) selon l'une quelconque des revendications précédentes, dans lequel les éléments constitutifs du clapet (1) sont réalisés à base de matière thermoplastique.

9. Réservoir comprenant un clapet (1) selon l'une quelconque des revendications précédentes.

## Claims

1. Safety valve (1) for a circuit (2) for ventilating a liquid tank, preventing liquid from being entrained and comprising a casing (4) which opens out inside the tank under the upper wall (3) of the latter and the upper part of which is connected to the ventilating circuit (2) by means of an orifice (7), comprising :
a) a needle (6) capable, in the high position, of shutting off the orifice (7) located in the head of the valve ;
b) a float (5) associated with the needle (6)and capable of sliding vertically inside the casing (4);
c) means (9) for supporting the float (5) and for displacing the said float upwards in the event of an inclination of the casing,
**characterized in that** a stem (11) extends the lower part of the casing inside the tank under the means (9) for supporting and displacing the float (5).

2. Valve (1) according to claim 1, in which the means (9) for supporting the float (5) and for displacing the said float (5) upwards in the event of an inclination of the casing (4) comprise a ball (10) of high-density material capable of being displaced by gravity in a perforated frustoconical cup (9).

3. Valve (1) according to either one of the preceding claims, in which the casing (4) comprises, in its upper part, one or more lateral apertures (12) allowing the passage of the gases.

4. Valve (1) according to the preceding claim, in which the casing (4) comprises, in its upper part, a plurality of calibrated lateral apertures (12) of small dimensions, in order to prevent the passage of significant flows of liquid.

5. Valve (1) according to any one of the preceding claims, in which the sliding of the float (5) inside the casing (4) is carried out by means of fitted guidance.

6. Valve (I) according to any one of the preceding claims, in which, when the needle (6) is in the high position and shuts off the orifice, it defines a closed volume (13) in the upper part of the casing (4).

7. Valve (1) according to any one of the preceding claims, in which the stem (11) is bevelled.

8. Valve (1) according to any one of the preceding claims, in which the component elements of the valve (1) are produced from a thermoplastic-based material.

9. Tank comprising a valve (1) according to any one of the preceding claims.

## Patentansprüche

1. Sicherheitsventil (1) für eine Lüftungsleitung (2) eines Flüssigkeitsbehälters zur Verhinderung des Mitführens von Flüssigkeit, umfassend eine Einfassung (4), die ins Innere des Behälters mündet, und zwar unterhalb der oberen Wand (3) von diesem, und deren oberer Teil durch eine Öffnung (7) mit der Lüftungsleitung (2) verbunden ist, mit:
a) einer Nadel (6), die in einer oberen Stellung die im Kopf des Ventils gelegene Öffnung (7) verschließen kann;
b) einem Schwimmer (5), der mit der Nadel (6) verbunden ist und sich im Inneren der Einfassung (4) vertikal verschieben kann;
c) Mitteln zum Abstützen (9) des Schwimmers (5) und zum Verlagern des besagten Schwimmers nach oben im Fall einer Schrägneigung der Einfassung,
**dadurch gekennzeichnet, dass** ein Schaft (11) den unteren Teil der Einfassung im Inneren des Behälters unter den Mitteln zum Abstützen (9) und zum Verlagern des Schwimmers (5) verlängert.

2. Ventil (1) nach Anspruch 1, bei dem die Mittel zum Abstützen (9) des Schwimmers (5) und zum Verlagern des besagten Schwimmers (5) nach oben im Fall einer Schrägneigung der Einfassung (4) eine Kugel (10) aus einem schweren Material umfassen, die sich durch Schwerkraft in einem durchbrochenen kegelstumpfförmigen Tiegel (9) verlagern kann.

3. Ventil (1) nach einem der vorangehenden Ansprüche, bei dem die Einfassung (4) in ihrem oberen Teil eine oder mehrere seitliche Öffnungen (12) aufweist, die den Hindurchtritt von Gasen gestatten.

4. Ventil (1) nach dem vorangehenden Anspruch, bei dem die Einfassung (4) in ihrem oberen Teil mehrere kalibrierte seitliche Öffnungen (12) mit kleinen Abmessungen aufweist, um den Hindurchtritt von bedeutenden Flüssigkeitsmengen zu verhindern.

5. Ventil (1) nach einem der vorangehenden Ansprüche, bei dem die Verschiebung des Schwimmers (5) im Inneren des Gehäuses (4) mit einer abgestimmten Führung bewirkt wird.

6. Ventil (1) nach einem der vorangehenden Ansprüche, bei dem, wenn sich die Nadel (6) in der oberen Stellung befindet und die Öffnung verschließt, sie im oberen Teil der Einfassung (4) ein geschlossenes Volumen (13) abgrenzt.

7. Ventil (1) nach einem der vorangehenden Ansprüche, bei dem der Schaft (11) abgeschrägt ist.

8. Ventil (1) nach einem der vorangehenden Ansprüche, bei dem die Bauelemente des Ventils (1) auf der Basis von thermoplastischem Kunststoff hergestellt sind.

9. Behälter, umfassend ein Ventil (1) nach einem der vorangehenden Ansprüche.
